# EUROPÄISCHE PATENTSCHRIFT

(11) **EP 0 992 563 B1**
(45) Veröffentlichungstag und Bekanntmachung des Hinweises auf die Patenterteilung: **02.04.2003**
(21) Anmeldenummer: 99116597.8
(22) Anmeldetag: 25.08.1999
(51) Int. Cl.: C09K 7/02

(54) **Alkalicarboxylathaltige Bohrspülung mit verbesserten Korrosionseigenschaften**
Wellbore fluid containing alkali carboxylates with improved anticorrosive properties
Fluide de forage contenenat des carboxylates alcalins et présentant des propriétés anticorrosives

(30) Priorität: 05.09.1998 DE 19840632
(43) Veröffentlichungstag der Anmeldung: 12.04.2000
(73) Patentinhaber: Clariant GmbH, 65929 Frankfurt am Main (DE)
(72) Erfinder: Korzilius, Joachim, 65760 Eschborn (DE); Minks, Peter, 84503 Altötting (DE)

(56) Entgegenhaltungen:
- WO-A-95/21900
- WO-A-95/24452
- WO-A-99/23188

## Beschreibung

Die vorliegende Erfindung betrifft eine alkalicarboxylathaltige Bohrspülung, die durch den Zusatz von Borverbindungen verminderte korrosive Eigenschaften aufweist.

Bei der Durchführung von Tiefbohrungen werden im allgemeinen Aufschlämmungen von Ton in Salzwasser zum Austrag des abgebohrten Gesteins verwendet. Diese Bohrspülungen enthalten weiterhin Polymere zur Bildung von Schutzkolloiden, sowie Beschwerungsmittel wie beispielsweise Schwerspat oder Kreide. Diese Beschwerungsmittel können als Feststoffe, die rheologischen Eigenschaften der Bohrspülungen ungünstig beeinflussen. Der Stand der Technik umfaßt daher auch lösliche Beschwerungsmittel. Als solche finden Alkali- und Erdalkalimetallhalogenide, Zinkbromid und Alkalimetallcarboxylate, insbesondere Formiate, Acetate und Propionate von Kalium und Natrium Verwendung. Diese Salze zeigen eine hohe Löslichkeit in Wasser, und es ist möglich, wäßrige Lösungen hoher Dichte aus ihnen herzustellen, die trotzdem eine niedrige Viskosität aufweisen.

In J.D. Downs, SPE Paper No. 25177 wird die Verwendung von Alkaliformiaten in Bohrspülungen offenbart. EP-A-0 572 113 offenbart die Verwendung von Kaliumund Cäsiumcarboxylaten als Hilfsmittel für Bohrspülungen.

Alkalimetallcarboxylate weisen bei der technischen Anwendung in bestimmten Fällen aber einen schwerwiegenden Nachteil auf. Beim Durchbohren von Gesteinsschichten, die natürlich vorkommende anorganische lonenaustauscher wie beispielsweise Zeolithe enthalten, kommt es zur Bildung freier Carbonsäuren aus den Carboxylaten. Die freien Carbonsäuren können zu beträchtlicher Korrosion an den Bohrwerkzeugen führen, insbesondere da die Bohrungen bei hoher Temperatur durchgeführt werden.

Die Aufgabe vorliegender Erfindung bestand somit darin, alkalicarboxylathaltige Bohrspülungen bereitzustellen, die eine verminderte Korrosion an Bohrwerkzeugen bewirken.

Überraschenderweise wurde gefunden, daß der Zusatz von Borverbindungen zu alkalicarboxylathaltigen Bohrspülungen deren Korrosivität gegenüber metallischen Wirkstoffen stark herabsetzt.

Gegenstand der Erfindung ist eine Bohrspülung auf Wasserbasis, enthaltend mindestens ein Alkalicarboxylat und mindestens eine lösliche Borverbindung.

Ein weiterer Gegenstand der Erfindung ist die Verwendung von Borverbindungen in Bohrspülungen, die Alkalicarboxylate enthalten, zur Verminderung der Korrosivität dieser Bohrspülungen.

Alkalicarboxylate sind Salze von Lithium, Natrium, Kalium, Rubidium oder Cäsium mit ein- oder mehrwertigen Carbonsäuren. Bevorzugte Carbonsäuren sind hierbei Ameisensäure (Alkaliformiate), Essigsäure (Alkaliacetate) und Propionsäure (Alkalipropionate). Bevorzugte Alkalimetalle sind Natrium, Kalium und Cäsium.

Besonders bevorzugt für die erfindungsgemäßen Bohrspülungen sind die Alkaliformiate und hier besonders das Kaliumformiat.

Die korrosiven Eigenschaften der Alkalicarboxylate werden durch Borverbindungen abgeschwächt. Vorzugsweise handelt es sich bei den Borverbindungen um Borsäuren, Borate, Boroxid oder organische Borverbindungen.

Als Borsäuren sind insbesondere die Orthoborsäure B(OH)₃, die Metaborsäure HBO₂ sowie komplexe Borsäuren, die durch Zusatz von mehrwertigen Alkoholen (z.B. Mannit) zu Orthoborsäure erhältlich sind, geeignet.

Als Borate sind Salze bevorzugt, die meta-(BO₂⁻), ortho-(BO₃³⁻), poly-(BₙO₂ₙ₋₁⁽ⁿ⁻²⁾⁻) oder per-(BO₃⁻) Borationen enthalten. Unter den Polyboraten sind die Tetraborate besonders bevorzugt. Als Kationen bevorzugt sind Na⁺, K⁺, Mg²⁺, Ca²⁺ und NH₄⁺. Beispiele bevorzugter Borate sind Natriumtetraborat, Kaliumtetraborat, Calciummetaborat, Kaliummetaborat und Natriumperborat.

Geeignete organische Borverbindungen sind solche, die in wäßrigem Medium nicht zur spontanen Zersetzung neigen. Insbesondere geeignet sind Ester der Borsäure mit ein- oder mehrwertigen Alkoholen, wie beispielsweise Borsäuretrimethylester, Borsäuremonoethanolaminester oder Borsäuretriethanolaminester.

Die in der Bohrspülung enthaltene Menge an Alkalicarboxylaten bestimmt sich nach der Art des Alkalicarboxylats und nach Art und Menge der weiteren Bestandteile der Bohrspülung. Bevorzugt ist eine Menge an Alkalicarboxylaten, die 30 bis 100 % der Sättigungsmenge in der Bohrspülung entspricht.

Die erfindungsgemäße Bohrspülung kann neben Alkalicarboxylaten und Borverbindungen auch weitere Bestandteile enthalten.

In einer bevorzugten Ausführungsform enthält die erfindungsgemäße Bohrspülung Tone zur Modifizierung der Viskosität. Die Tone können den Bohrspülungen zugesetzt werden, oder es kann sich bei den Tonen um erbohrte Feststoffe handeln. Unter den Tonen sind insbesondere solche bevorzugt, deren Hauptbestandteile Magnesiumsilicat oder Aluminiumsilicat (Bentonite) sind. Sie werden vorzugsweise in Mengen von etwa 10 bis 150 g/l Bohrspülung verwendet.

In einer weiteren bevorzugten Ausführungsform enthält die erfindungsgemäße Bohrspülung Polymere natürlichen oder synthetischen Ursprungs, die zur Bildung von Schutzkolloiden befähigt sind. Solche Polymere sind beispielsweise Celluloseether, wie etwa Hydroxyethylcellulose oder Salze von Carboxymethylcellulose oder Carboxymethylhydroxyethylcellulose, Stärke und deren Derivate sowie Biopolymere (beispielsweise XC-Polymer, Hersteller: KELCO). Cellulosederivate entsprechen beispielsweise der Formel 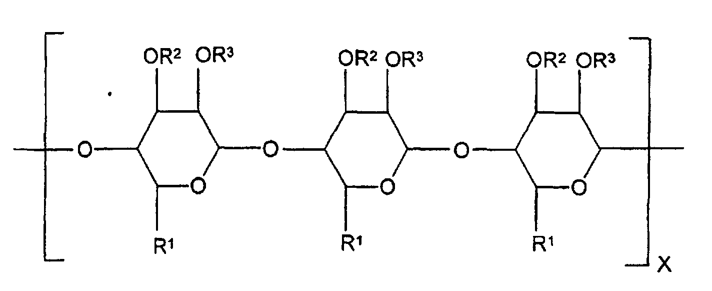 worin R¹ für -CH₂-(OC₂H₄)ₙ-OH mit n =1 bis 5 oder -CH₂-OCH₂COO^{⊖} und R² und R³ unabhängig voneinander für Wasserstoff oder -(C₂H₄O)ₙ-H mit n = 1 bis 5 stehen. X ist vorzugsweise so bemessen, daß das mittlere Molekulargewicht dieser Cellulosederivate zwischen 10.000 und 1.000.000 Einheiten beträgt.

Werden in der erfindungsgemäßen Bohrspülung synthetische Polymere verwendet, so handelt es sich dabei im allgemeinen um Homo- oder Mischpolymerisate aus ethylenisch ungesättigten Verbindungen. Bevorzugt sind solche Polymere, die Struktureinheiten enthalten, die sich von Acrylsäure oder deren Derivaten ableiten lassen. Weiterhin sind solche Polymere bevorzugt, die Struktureinheiten enthalten, welche sich von Vinylgruppen enthaltenden Verbindungen ableiten lassen.

Beispiele von Monomeren, die zur Herstellung geeigneter Polymere verwendet werden können, umfassen:
(Meth)Acrylsäure und deren Ester, (Meth)Acrylamide, Acrylamidomethylpropansulfonsäure, N-Vinylpyrrolidon, Acrylnitril, N-mono- und -disubstituierte (Meth)Acrylamide, Acrylamidosulfonsäuren, Acrylamidobuttersäure, N-methyl-N-vinylacetat, Hydroxyalkylacrylate, Vinylsulfonsäure, Vinylcarbonsäureamide.

Enthalten die erfindungsgemäßen Bohrspülungen Polymere, so beträgt die Konzentration dieser Polymere in der fertigen Bohrspülung vorzugsweise zwischen 0,5 und 70 g/l, insbesondere 3 bis 30 g/l.

In einer weiteren bevorzugten Ausführungsform der Erfindung enthält die Bohrspülung einen Coinhibitor, der die Wirkung der erfindungsgemäß verwendeten Borverbindung verstärkt. Bevorzugte Coinhibitoren sind Alkalicarbonate, Alkalisilicate, Mono- und Dicarbonsäuren, Alkalibenzoate, Benzotriazole, Tolyltriazole, Alkalinitrite und Alkalinitrate. Vorzugsweise werden die Coinhibitoren in Mengen von 0,5 bis 4 Gew.-%, bezogen auf das Gewicht der fertigen Bohrspülung verwendet, insbesondere in Mengen von 1 bis 3 Gew.-%.

### Beispiele

Im folgenden werden Ergebnisse dargestellt, die die Eignung der erfindungsgemäßen Bohrspülung belegen.

Für alle Versuche wurde eine Bohrspülung hergestellt, enthaltend

| | |
|---|---|
| 350 ml | Kaliumformiatlösung 50 % |
| 3 Gew.-% | SWDC (salt water drilling clay) |
| 3 Gew.-% | Rev-Dust® (simulierte erbohrte Feststoffe) |
| 3 Gew.-% | Polymer der in der Tabelle angegebenen Art |

Korrosionsschutz:
1 = 1 Gew.-% Borax + 2 Gew.-% K₂CO₃

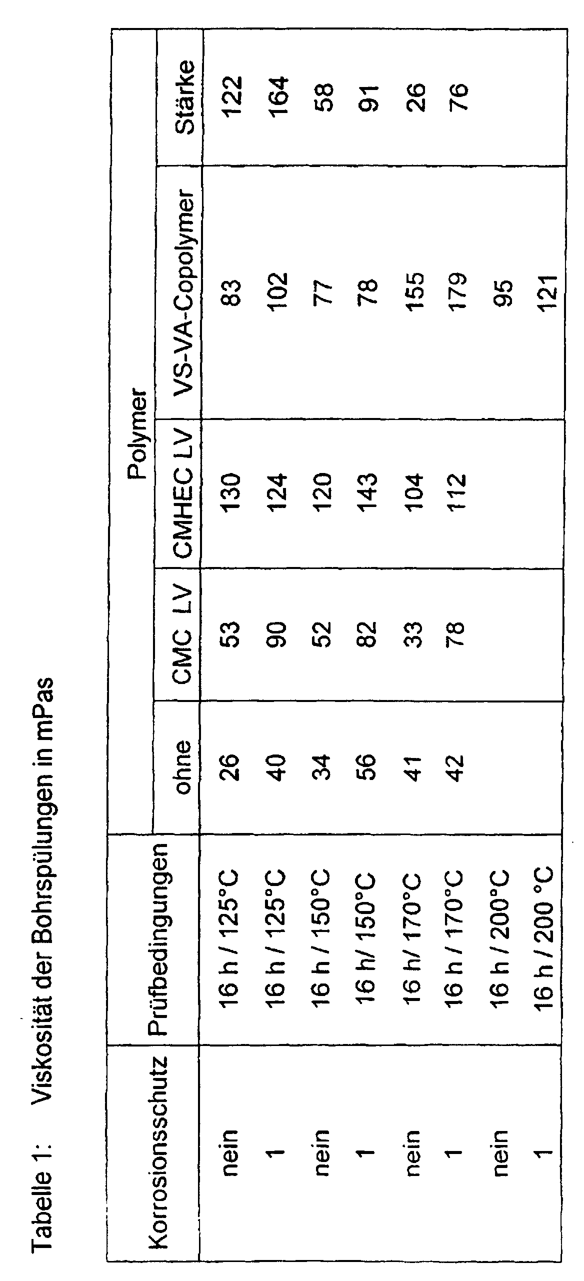

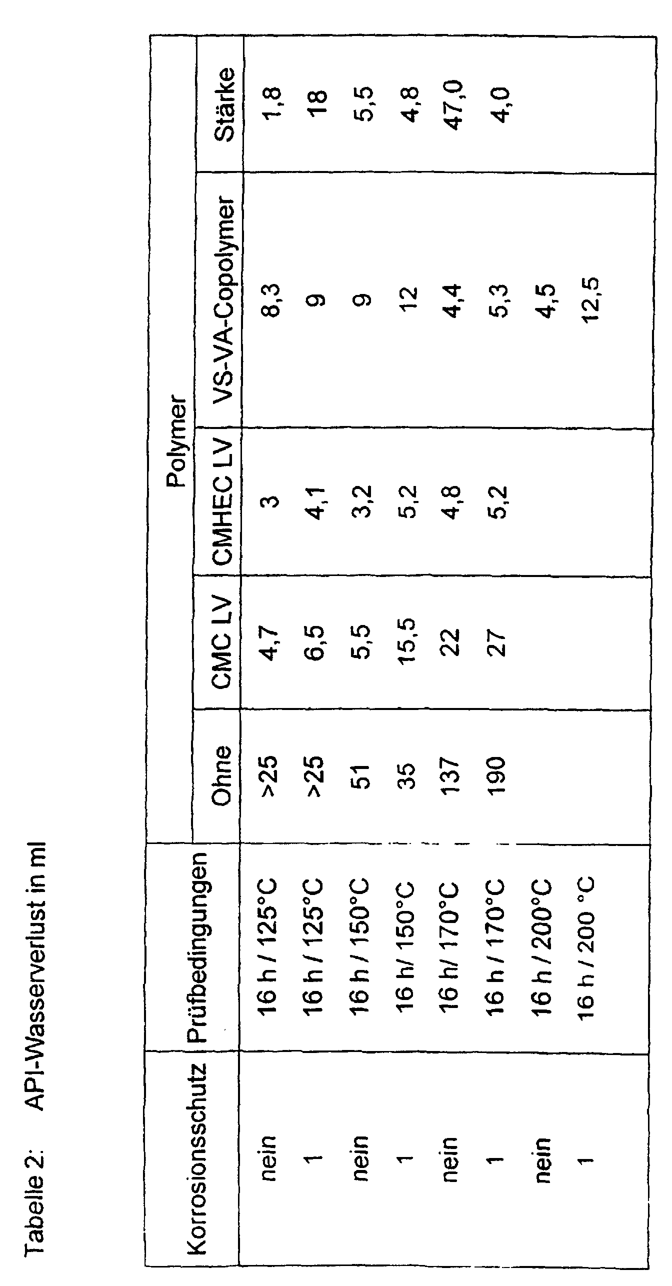

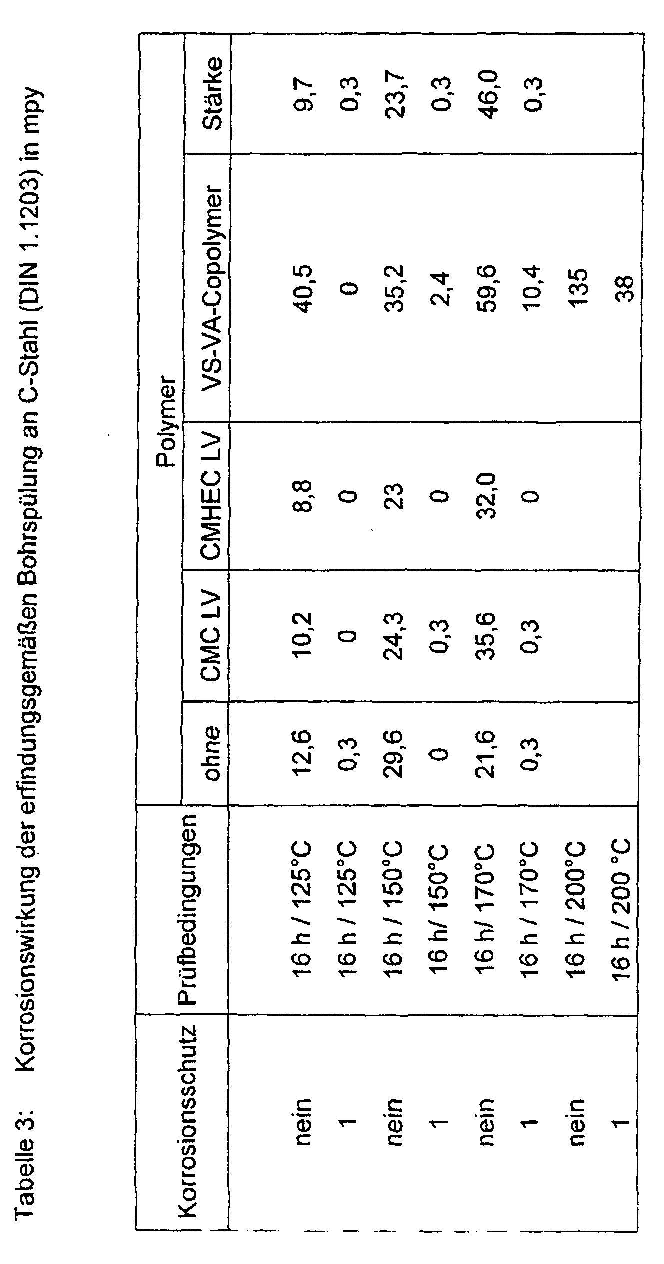

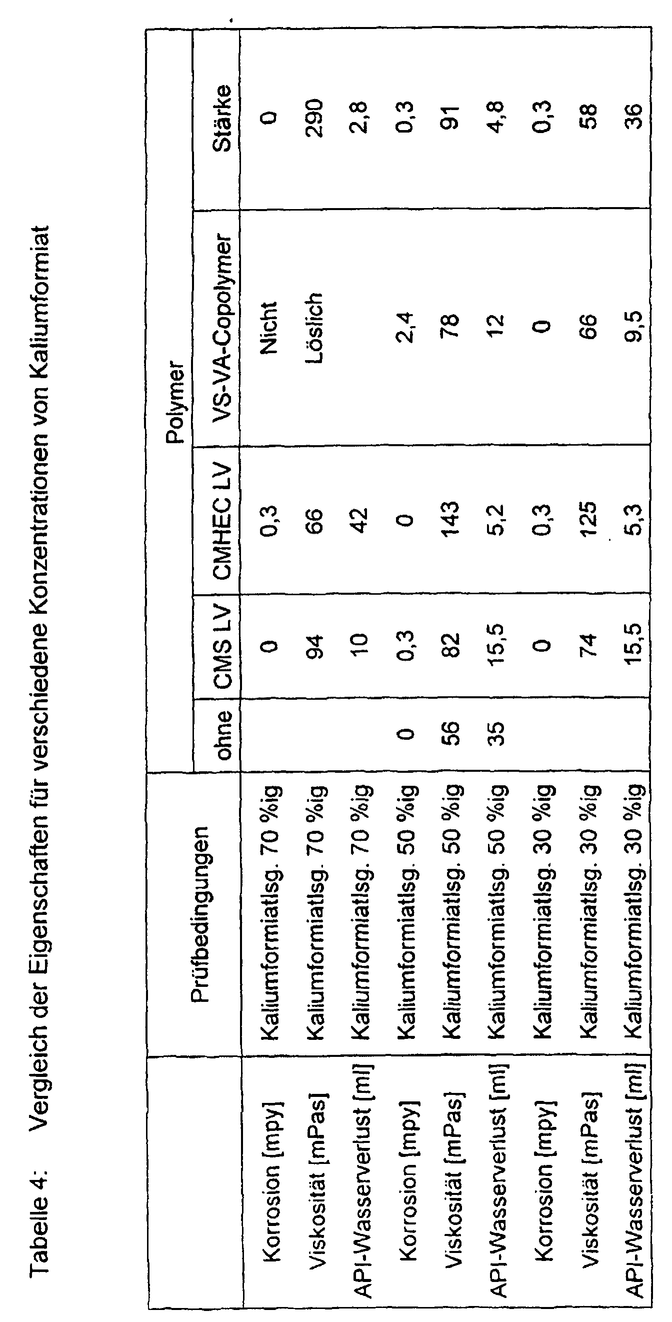

## Patentansprüche

1. Bohrspülung auf Wasserbasis, enthaltend mindestens ein Alkalicarboxylat und mindestens eine lösliche Borverbindung.

2. Bohrspülung nach Anspruch 1, **dadurch gekennzeichnet, daß** es sich bei dem Alkalicarboxylat um Cäsium-, Natrium- undloder Kaliumsalze der Ameisensäure, Essigsäure und/oder Propionsäure handelt.

3. Bohrspülung nach Anspruch 1 und/oder 2, **dadurch gekennzeichnet, daß** es sich bei der Borverbindung um Borsäure, Borate, Boroxid oder eine bororganische Verbindung handelt.

4. Bohrspülung nach einem oder mehreren der Ansprüche 1 bis 3, **dadurch gekennzeichnet, daß** sie zusätzlich Tone in Mengen von 10 bis 150 g/l Bohrspülung enthält.

5. Bohrspülung nach einem oder mehreren der Ansprüche 1 bis 4, **dadurch gekennzeichnet, daß** sie zur Bildung von Schutzkolloiden befähigte Polymere in Mengen von 0,5 bis 70 g/l Bohrspülung enthält.

6. Bohrspülung nach Anspruch 5, **dadurch gekennzeichnet, daß** es sich bei den Polymeren um Celluloseether, Stärke, Stärkederivate, Biopolymere oder um Homo- oder Mischpolymerisate ethylenisch ungesättigter Verbindungen handelt.

7. Bohrspülung nach einem oder mehreren der Ansprüche 1 bis 6, **gekennzeichnet durch** einen Gehalt von 0,5 bis 4 Gew.-%, bezogen auf das Gewicht der fertigen Bohrspülung an Coinhibitoren, ausgewählt aus der Gruppe bestehend aus Alkalicarbonaten, Alkalisilicaten, Mono- und Dicarbonsäuren, Alkalibenzoaten, Benzotriazolen, Tolyltriazolen, Alkalinitriten und Alkalinitraten.

8. Verwendung von Borverbindungen in Bohrspülungen, die Alkalicarboxylate enthalten, zur Verminderung der Korrosivität dieser Bohrspülungen.

## Claims

1. A water-based drilling fluid which comprises at least one alkali metal carboxylate and at least one soluble boron compound.

2. The drilling fluid as claimed in claim 1, wherein the alkali metal carboxylate is a cesium, sodium and/or potassium salt of formic acid, acetic acid and/or propionic acid.

3. The drilling fluid as claimed in claim 1 and/or 2, wherein the boron compound is boric acid, borates, boron oxide or an organoboron compound.

4. The drilling fluid as claimed in one or more of claims 1 to 3, wherein it additionally comprises clays in amounts of from 10 to 150 g/l of drilling fluid.

5. The drilling fluid as claimed in one or more of claims 1 to 4, wherein it comprises, in amounts of from 0.5 to 70 g/l of drilling fluid, polymers capable of forming protective colloids.

6. The drilling fluid as claimed in claim 5, wherein the polymers are cellulose ethers, starch, starch derivatives, biopolymers or homopolymers or mixed polymers of ethylenically unsaturated compounds.

7. The drilling fluid as claimed in one or more of claims 1 to 6, wherein it has a content of from 0.5 to 4% by weight, based on the weight of the finished drilling fluid, of coinhibitors, selected from the group consisting of alkali metal carbonates, alkali metal silicates, mono- and dicarboxylic acids, alkali metal benzoates, benzotriazoles, tolyltriazoles, alkali metal nitrites and alkali metal nitrates.

8. The use of boron compounds in drilling fluids which comprise alkali metal carboxylates to decrease the corrositivity of these drilling fluids.

## Revendications

1. Fluide de forage à base d'eau, contenant au moins un carboxylate alcalin et au moins un composé soluble de bore.

2. Fluide de forage selon la revendication 1, **caractérisé en ce qu'**il s'agit pour le carboxylate alcalin de sels de césium, de sodium et/ou de potassium de l'acide formique, de l'acide acétique et/ou de l'acide propionique.

3. Fluide de forage selon la revendication 1 et/ou 2, **caractérisé en ce qu'**il s'agit pour le composé de bore d'acide borique, de borate, d'oxyde de bore ou d'un composé organique du bore.

4. Fluide de forage selon une ou plusieurs des revendications 1 à 3, **caractérisé en ce qu'**il contient en plus des argiles en quantités de 10 à 150 g/l de solution de forage.

5. Fluide de forage selon une ou plusieurs des revendications 1 à 4, **caractérisé en ce qu'**il contient des polymères aptes à former des colloïdes protecteurs en quantités de 0,5 à 70 g/l du fluide de forage.

6. Fluide de forage selon la revendications 5, **caractérisé en ce qu'**il s'agit pour les polymères d'éther de cellulose, d'amidon, de dérivés d'amidon, de biopolymères ou d'homo- ou copolymérisats de composés éthyléniquement insaturés.

7. Fluide de forage selon une ou plusieurs des revendications 1 à 6, **caractérisé par** une teneur de 0,5 à 4 % en poids, par rapport au poids du fluide de forage terminé en co-inhibiteurs, choisi dans le groupe constitué de carbonates alcalins, de silicates alcalins, d'acides mono- et dicarboxyliques, de benzoates alcalins, de benzotriazoles, de tolyltriazoles, de nitrites alcalins et de nitrates alcalins.

8. Utilisation de composés de bore dans des fluides de forage, qui contiennent des carboxylates alcalins, pour la diminution de la corrosivité de ces fluides de forage.
